Europäisches Patentamt

European Patent Office

Office européen des brevets

(19)

(11) Numéro de publication : **0 097 312**
**B1**

(12)

# FASCICULE DE BREVET EUROPÉEN

(45) Date de publication du fascicule du brevet :
23.03.88

(51) Int. Cl.⁴ : **F 02 C   7/228**, F 16 K 11/06,
F 23 K   5/00

(21) Numéro de dépôt : 83105815.1

(22) Date de dépôt : 14.06.83

---

(54) Dispositif de dosage et de répartition de liquide combustible sous pression entre plusieurs brûleurs.

---

(30) Priorité : 18.06.82 FR 8210641

(43) Date de publication de la demande :
04.01.84 Bulletin 84/01

(45) Mention de la délivrance du brevet :
23.03.88 Bulletin 88/12

(84) Etats contractants désignés :
CH DE FR GB IT LI NL SE

(56) Documents cités :
DE-A- 2 443 301
FR-A- 2 125 861
FR-A- 2 250 909
FR-A- 2 323 946
US-A- 2 027 360
US-A- 2 832 368

(73) Titulaire : ALSTHOM
38, avenue Kléber
F-75784 Paris Cedex 16 (FR)

(72) Inventeur : Bourquin, Robert
23, rue de la Chapelle Valdieu-Lutran
F-68210 Dannemarie (FR)

(74) Mandataire : Weinmiller, Jürgen et al
Lennéstrasse 9 Postfach 24
D-8133 Feldafing (DE)

EP 0 097 312 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a trait à un dispositif de dosage et de répartition de liquide combustible entre plusieurs brûleurs.

Il est connu dans les turbines à gaz et dans les chaudières d'utiliser des répartiteurs de flux pour alimenter d'une façon égale en combustible liquide les divers brûleurs, tout en faisant varier la quantité de liquide envoyé dans chaque brûleur. Mais ces répartiteurs de flux fonctionnent mal lorsque le combustible liquide n'est pas lubrifiant.

Il est connu du document US-A-2 832 368 le dispositif de dosage et de répartition de liquide sous pression entre n sorties comportant un piston qui coulisse à l'intérieur d'un cylindre fermé au moins à une extrémité et alimenté en liquide sous pression, ledit cylindre étant muni sur sa surface interne d'ouvertures reliées à n sorties, lesdites ouvertures pouvant être obturées en tout ou en partie par ledit piston et étant disposées symétriquement de façon que, pour chaque position du piston, la section de passage du liquide à travers les ouvertures alimentant une sortie déterminée soit la même pour toutes les sorties.

Il est d'autre part connu du document FR-A-2 323 946 un dispositif de déperdition d'énergie à parcours sinueux comportant un piston coulissant à l'intérieur d'un cylindre fermé à au moins une extrémité et alimenté en liquide sous pression, ledit cylindre étant muni sur sa surface interne d'ouvertures reliées par des canaux de sortie lesdites ouvertures pouvant être obturées en tout ou en partie par ledit piston et étant muni de deux trous égalisant la pression sur les deux faces extrêmes et étant muni d'un axe traversant de façon étanche les deux extrémités du cylindre.

Le dispositif de dosage et de répartition de liquide sous pression entre n sorties selon l'invention comporte un piston qui coulisse à l'intérieur d'un cylindre fermé au moins à une extrémité et alimenté en liquide sous pression, ledit cylindre étant muni sur sa surface interne d'ouvertures reliées aux n sorties, lesdites ouvertures pouvant être obturées en tout ou en partie par ledit piston et étant disposées symétriquement de façon que, pour chaque position du piston, la section de passage du liquide à travers les ouvertures alimentant une sortie déterminée soit la même pour toutes les sorties est caractérisé en ce que chacune des sorties étant reliée à un brûleur déterminé par un régulateur réglant la pression en amont du régulateur à une valeur de consigne, cette valeur étant la même pour tous les régulateurs.

Ainsi la perte de charge dans le cylindre sera la même pour chaque sortie et, étant donné que les sections de passage sont les mêmes, le débit pour chaque sortie sera le même, si bien que même lorsqu'un brûleur est encrassé, il est alimenté par la même quantité de combustible que les autres.

Selon une réalisation de l'invention, chaque sortie débouche dans une cavité ménagée dans le cylindre, ladite cavité étant reliée à plusieurs ouvertures par des canaux également ménagés dans le cylindre, ce qui assure la perte de charges. Pour augmenter celle-ci, les canaux peuvent être munis d'étranglement.

Selon une réalisation préférentielle de l'invention, le cylindre est fermé à ses deux extrémités et le piston qui sépare le cylindre en deux chambres est muni d'au moins un trou mettant en communication les deux chambres, ledit piston étant monté sur un axe traversant d'une façon étanche les deux extrémités du cylindre.

Ainsi le piston est équilibré et les variations de pression du liquide n'agissent pas directement sur le piston.

De plus le déplacement du piston n'a aucune influence transitoire sur les débits.

Pour améliorer les performances du dispositif, la valeur de consigne des régulateurs est réglée en permanence par une grandeur dépendant de la grandeur servant à régler la position du piston.

Ainsi pour un faible débit on peut baisser la pression amont des régulateurs, ce qui permet de baisser encore plus la pression d'alimentation du liquide alimentant le cylindre.

Chaque régulateur est équipé de préférence de deux détecteurs de position ajustables. Dans un premier temps ils seront rapprochés et placés dans la zone de fonctionnement médiane pour effectuer des réglages. Puis dans un second temps pour le fonctionnement normal, les deux détecteurs seront éloignés de la position médiane et indiqueront pendant la marche les anomalies des brûleurs, qui correspondent à une perte de charge dans le brûleur trop grande ou trop petite.

Le dispositif selon l'invention peut être utilisé pour alimenter en combustible liquide aussi bien les brûleurs d'une turbine à gaz que les brûleurs d'une chaudière.

La présente invention sera mieux comprise à la lumière de la description qui va suivre, dans laquelle :

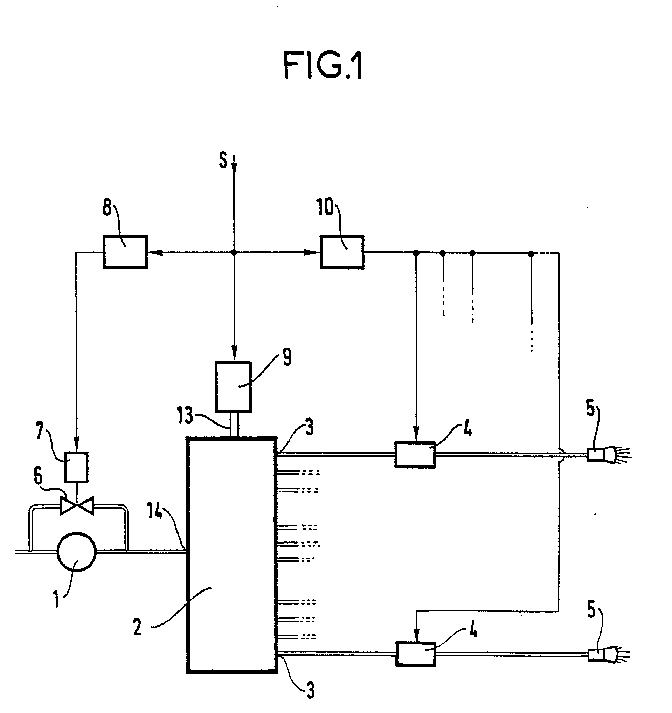

La figure 1 représente un schéma bloc du dispositif selon l'invention.

La figure 2 représente une coupe II-II passant par l'axe du doseur répartiteur de la figure 4.

La figure 3 représente un détail III d'un canal du doseur répartiteur de la figure 2.

La figure 4 représente une coupe IV-IV perpendiculaire à l'axe du doseur répartiteur de la figure 2.

La figure 5 représente un régulateur de pression amont utilisable dans le dispositif selon la figure 1.

La figure 6 représente un diagramme de pression entre l'entrée du doseur répartiteur de la figure 1 et la sortie de brûleurs.

Le dispositif de dosage et de répartition selon l'invention comporte une pompe 1 pompant le liquide combustible vers un doseur répartiteur 2 répartissant le liquide entre n sorties 3. Chaque sortie 3 est reliée à un régulateur de pression amont 4 qui alimente un brûleur 5.

Aux bornes de la pompe 1 est disposé un bypass 6 avec son dispositif de commande 7 qui reçoit un signal de commande d'un adaptateur 8. Le doseur répartiteur 2 est commandé par un servomoteur 9. Le régulateur 4 reçoit son point de consigne pour la pression amont d'un adaptateur 10. Les adaptateurs 8 et 10 et le servomoteur sont commandés par le même signal S qui dépend du débit que l'on désire obtenir dans les brûleurs 5.

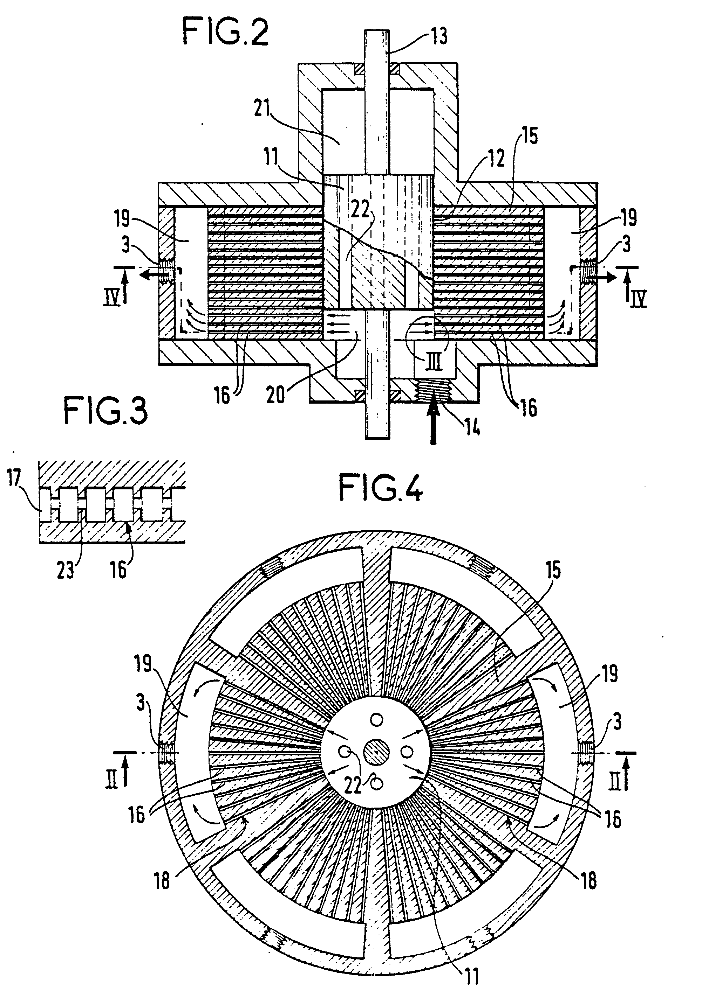

Le doseur répartiteur 2 est représenté en détail sur les figures 2 à 4. Il comporte un piston 11 coulissant dans un cylindre vertical 12. Le cylindre 12 est fermé à ses deux extrémités et le piston 11 est monté sur un axe 13 traversant de façon étanche les deux extrémités du cylindre 12. Dans l'extrémité du bas est ménagée une entrée 14 de liquide combustible sous pression. La paroi interne du cylindre 12 comporte un épaississement 15 sur une hauteur égale à la hauteur du piston 11. Cet épaississement 15 est muni de nombreux canaux 16 perpendiculaires à l'axe 13. Ces canaux 16 débouchent par des ouvertures 17 sur la paroi interne du cylindre 12.

Ces canaux 16 sont groupés en n groupes 18 (six dans l'exemple des figures 2 et 4).

Chaque groupe 18 débouche à l'extrémité opposée aux ouvertures 17 dans une cavité 19. Chaque cavité 19 est munie d'une sortie 3.

Le piston sépare l'intérieur du cylindre 12 en deux chambres 20, 21 qui sont en communication par des trous longitudinaux 22 ménagés dans le piston 11.

Lorsque le piston 11 est en position basse, toutes les ouvertures 17 sont obturées, par contre lorsque le piston est en position haute, aucune ouverture 17 n'est obturée. Les ouvertures 17 sont symétriquement disposées autour de l'axe 13 de façon que pour chaque position du piston 11 la surface totale des ouvertures non obturées de chaque groupe 18 soit la même.

Chaque canal 16 peut comprendre une série d'étranglement 23 pour accroître la perte de charge le long de ce canal.

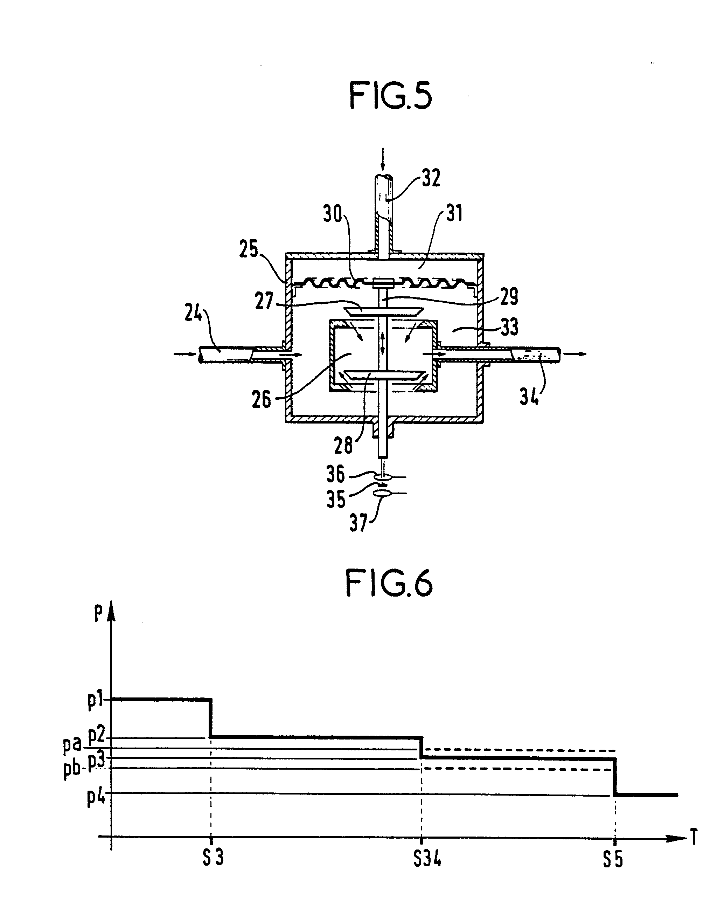

On a représenté un exemple de régulateur 4 de pression amont sur la figure 5.

Ce régulateur comporte une entrée de combustible 24 rentrant dans une enceinte fermée 25.

A l'intérieur de cette enceinte 25 est disposée une enceinte plus petite 26 comportant un couvercle 27 et un fond 28 montés tous deux sur un axe vertical 29. L'extrémité supérieure de cet axe 29 est reliée à une paroi souple 30 sensiblement horizontale séparant l'enceinte 25 en deux parties, une partie supérieure 31 et une partie inférieure 33.

Dans la partie supérieure 31 débouche une entrée de commande 32. Dans la partie inférieure 33 sont situées l'enceinte 26 et l'entrée 24. L'enceinte 26 est munie d'une sortie 34 traversant la paroi de l'enceinte 25 et alimentant un brûleur.

L'extrémité inférieure de l'axe 29 est munie d'un index 35 qui coopère avec un premier détecteur 36 et un second détecteur 37 dont les positions sont ajustables.

Les pressions dans la partie supérieure 31 et dans la partie inférieure 33, donc à l'entrée 24, sont égales en fonctionnement normal. Si la pression dans la partie 33 augmente l'axe 29 monte et le combustible s'échappe à travers l'enceinte 26 vers le brûleur associé, jusqu'à ce que les pressions de part et d'autre de la paroi souple 30 s'équilibrent.

Par contre, si la pression dans la partie 33 diminue, l'axe 29, s'abaisse diminuant l'écoulement de liquide à travers l'enceinte 26, ce qui ramène l'équilibre entre les pressions de part et d'autre de la paroi souple 30. La pression amont du régulateur est donc toujours réglée à une valeur qui dépend de la commande appliquée en 32. En appliquant la même commande à tous les régulateurs 4, on peut régler leurs pressions amont à la même valeur.

Pour effectuer le réglage du dispositif selon l'invention on rapproche pour au moins l'un des régulateurs les deux détecteurs 36 et 37 et on les place dans la zone de fonctionnement.

Le réglage consiste à ajuster la loi de variation du point de consigne dirigé vers tous les régulateurs 4, au signal servant à régler la position du piston ou bien à la position de celui-ci, en tenant compte de la caractéristique des brûleurs 5.

L'on agira sur les adaptateurs 8 et 10 et/ou sur l'émetteur de point de consigne (fournissant le signal S).

Ensuite, pour le fonctionnement normal, les deux détecteurs 36 et 37 seront éloignés de la position médiane et indiqueront, pendant la marche, les anomalies éventuelles des brûleurs 5, perte de charge trop grande ou trop petite en fonction du débit. Cela voudra dire que le brûleur 5 en alarme aura changé de caractéristique, que le régulateur 4 correspondant n'est plus capable de corriger l'écart de perte de charge, et que son débit de combustible est différent de celui des autres brûleurs 5.

Sur la figure 6 on a représenté le diagramme de pression P en fonction du trajet du fluide T.

Grâce à la pompe 1 le liquide atteint une pression P1 dans le cylindre 12. A la sortie 3 il est à la pression P2. La répartition s'est faite grâce à la perte de charge P1-P2 dans le doseur répartiteur 2.

La pression à la sortie du régulateur est P3 et la pression à la sortie du brûleur est P4.

La pression P3 peut varier entre deux limites Pa et Pb correspondant à la plage de régulation des régulateurs 4.

Ainsi pour chaque brûleur, selon qu'il est plus ou moins encrassé, la pression P3 sera plus ou moins forte de façon que le débit de liquide reste le même sur tous les brûleurs (la pression P2 étant la même pour tous les régulateurs 4).

La pression P2 sera réglée par l'adaptateur 10 en fonction du signal S proportionnel au débit de combustible à imposer. Plus S sera grand, plus on choisira P2 élevé.

Lorsque S est grand, le servo-moteur relève le piston 11 de façon à ce que la section d'écoulement du liquide soit grande. Le débit sera fonction de la position du piston 11 et bien évidemment de la pression P2.

Si le débit désiré est faible, l'adaptateur 8 ouvrira le bypass 6 de façon à ce que la pompe 1 travaille moins pour économiser l'énergie.

## Revendications

1. Dispositif de dosage et de répartition de liquide combustible sous pression entre n sorties (3) comportant un piston (11) qui coulisse à l'intérieur d'un cylindre (12) fermé au moins à une extrémité et alimenté en liquide sous pression, ledit cylindre (12) étant muni sur sa surface interne d'ouvertures (17) reliées aux n sorties (3), lesdites ouvertures (17) pouvant être obturées en tout ou en partie par ledit piston (11) et étant disposées symétriquement de façon que, pour chaque position du piston (11), la section de passage du liquide à travers les ouvertures (17) alimentant une sortie déterminée (3) soit la même pour toutes les sorties (3) caractérisé en ce que chacune des sorties (3) est reliée à un brûleur (5) par un régulateur (4) réglant la pression en amont du régulateur à une valeur de consigne, cette valeur étant la même pour tous les régulateurs (4).

2. Dispositif selon la revendication 1, caractérisé en ce que chaque sortie (3) débouche dans une cavité (19) ménagée dans le cylindre (12), ladite cavité (19) étant reliée à plusieurs ouvertures (17) par des canaux (16) également ménagés dans le cylindre (12).

3. Dispositif selon l'une des revendications précédentes, caractérisé en ce que le cylindre (12) est fermé à ses deux extrémités et que le piston (11) qui sépare le cylindre (12) en deux chambres (20, 21) est muni d'au moins un trou (22) mettant en communication les deux chambres (20, 21), ledit piston (11) étant monté sur un axe (13) traversant d'une façon étanche les deux extrémités du cylindre (12).

4. Dispositif selon l'une des revendications 2 ou 3, caractérisé en ce que les canaux (16) comportent une série d'étranglements (23).

5. Dispositif selon l'une des revendications précédentes, caractérisé en ce que la valeur de consigne des régulateurs (4) est réglée en permanence par une grandeur dépendant de la grandeur servant à régler la position du piston (11).

6. Dispositif selon l'une des revendications précédentes, caractérisé en ce que chaque régulateur (4) est muni de deux détecteurs (36, 37) de début de course et de fin de course servant à indiquer que le régulateur (4) ne peut plus effectuer de régulation correcte.

## Claims

1. Apparatus for supplying and distributing liquid fuel under pressure between n outlets (3), the apparatus including a piston (11) slidably mounted inside a cylinder (12) which is closed at at least one end and which is supplied with liquid under pressure, the said cylinder (12) being provided on its inside surface with openings (17) connected to the n outlets (3), the said openings (17) being partially or completely closable by the said piston (11) end being symmetrically disposed in such a manner that for each position of the piston (11) the area of the liquid flow passage through the openings (17) feeding a given outlet (3) is the same for all the outlets (3), the apparatus being characterized in that each of the said outlets (3) is connected to a burner (5) by a respective regulator (4) for regulating the pressure upstream from the regulator (4) to a reference value, the said value being the same for all of the regulators (4).

2. Apparatus according to claim 1, characterized in that each outlet (3) opens into a cavity (19) made in the cylinder (12), the said cavity (19) being connected to a plurality of openings (17) by channels (16) also made in the cylinder (12).

3. Apparatus according to claim 1, characterized in that the cylinder (12) is closed at both ends and that the piston (11) which separates the cylinder (12) into two chambers (20, 21) is provided with at least one hole (22) putting the chambers (20, 21) into communication with each other, the said piston (11) being mounted on a shaft (13) which passes through both ends of the cylinder (12) in sealed manner.

4. Apparatus according to claim 2 or 3, characterized in that each channel (16) is fitted with a series of constrictions (23).

5. Apparatus according to any preceding claim, characterized in that the reference value to which the regulators (4) are set is continuously regulated on a magnitude which is itself dependent on the magnitude used to regulate the position of the piston (11).

6. Apparatus according to any preceding claim, characterized in that each regulator (4) is equipped with two detectors (36, 37) for detecting when the regulator is at either end of its stroke, and serving to indicate that the regulator (4) is not capable of performing proper regulation.

## Patentansprüche

1. Dosier- und Verteilvorrichtung für flüssigen unter Druck stehenden Brennstoff zwischen n Ausgängen (3), mit einem Kolben (11), der in einem an mindestens einem Ende geschlossenen Zylinder (12) gleitet, wobei der Zylinder mit unter Druck stehender Flüssigkeit gespeist wird und an seiner inneren Oberfläche Öffnungen (17) besitzt, die an die n Ausgänge (3) angeschlossen sind und ganz oder teilweise von dem Kolben (11) verschlossen werden können sowie derart symmetrisch angeordnet sind, daß für jede Kolbenposition (11) der Durchlaßquerschnitt für Flüssigkeit durch die Öffnungen (17) zur Speisung eines bestimmten Ausgangs (3) für alle Ausgänge (3) derselbe ist, dadurch gekennzeichnet, daß jeder der Ausgänge (3) mit einem Brenner (5) über einen Regler (4) verbunden ist, der den Druck vor dem Regler (4) auf einen Sollwert einregelt, welcher für alle Regler (4) derselbe ist.

2. Vorrichtung nach Anspruch 1, dadurch gekennzeichnet, daß jeder Ausgang (3) in einen Hohlraum (19) mündet, der im Zylinder (12) vorgesehen ist und an mehrere Öffnungen (17) über Kanäle (16) angeschlossen ist, die ebenfalls im Zylinder (12) vorgesehen sind.

3. Vorrichtung nach einem der vorhergehenden Ansprüche, dadurch gekennzeichnet, daß der Zylinder (12) an beiden Enden geschlossen ist und daß der Kolben (11), der den Zylinder (12) in zwei Kammern (20, 21) aufteilt, mit mindestens einem Loch (22) versehen ist, das die beiden Kammern (20, 21) miteinander verbindet, wobei der Kolben (11) auf einer die beiden Enden des Zylinders (12) dicht durchquerenden Achse (13) montiert ist.

4. Vorrichtung nach einem der Ansprüche 2 oder 3, dadurch gekennzeichnet, daß die Kanäle (16) eine Reihe von Verengungen (23) aufweisen.

5. Vorrichtung nach einem der vorhergehenden Ansprüche, dadurch gekennzeichnet, daß der Sollwert der Regler (4) permanent durch eine Größe geregelt wird, die von der der Regelung der Lage des Kolbens (11) dienenden Größe abhängt.

6. Vorrichtung nach einem der vorhergehenden Ansprüche, dadurch gekennzeichnet, daß jeder Regler (4) zwei Detektoren (36, 37) für den Anfang und das Ende des Kolbenhubs aufweist, die dazu dienen, anzugeben, daß der Regler (4) keine korrekte Regelung mehr durchführen kann.

# FIG.1

# FIG.2

# FIG.3

# FIG.4

# FIG.5

# FIG.6